# EUROPÄISCHE PATENTSCHRIFT

(11) **EP 0 981 717 B1**
(45) Veröffentlichungstag und Bekanntmachung des Hinweises auf die Patenterteilung: **30.07.2003**
(21) Anmeldenummer: 98924229.2
(22) Anmeldetag: 28.04.1998
(51) Int. Cl.: G01B 9/02

(54) **MIT PANCHARATNAM PHASE ABSTIMMBARES INTERFEROMETER MIT GETRENNTEM ANALYSATOR**
INTERFEROMETER TUNABLE BY PANCHARATNAM PHASE WITH SEPARATE ANALYZER
INTERFEROMETRE ACCORDABLE PAR PHASE PANCHARATNAM AVEC ANALYSEUR SEPARE

(30) Priorität: 15.05.1997 DE 19720246
(43) Veröffentlichungstag der Anmeldung: 01.03.2000
(73) Patentinhaber: Deutsche Telekom AG, 53113 Bonn (DE)
(72) Erfinder: DULTZ, Wolfgang, D-65936 Frankfurt am Main (DE); BERESNEV, Leonid, D-64291 Darmstadt (DE); HILS, Bernhard, D-61462 Königstein (DE)
(86) Internationale Anmeldenummer: EP9802494
(87) Internationale Veröffentlichungsnummer: WO98051992

(56) Entgegenhaltungen:
- JP-A- 3 195 907
- US-A- 3 635 552
- US-A- 3 873 207
- US-A- 5 420 686
- US-A- 5 627 666
- M.MARTINELLI ET AL.: "A geometric (Pancharatnam) phase approach to the polarization and phase control in the coherent optics circuits" OPTICS COMMUNICATIONS, Bd. 80, Nr. 2, 15.Dezember 1990, AMSTERDAM (NL), Seiten 166-176, XP000165623

## Beschreibung

Die Erfindung betrifft ein Interferometer, insbesondere zur Vermessung von optischen Flächen gemäß dem Oberbegriff des Anspruchs 1 (US-A-3 635 552).

Ein herkömmliches Zweistrahlinterferometer wird zum Vermessen optischer Flächen eingesetzt, indem es am Ausgang ein Interferenzscreifenmuster von der optischen Fläche erzeugt und beispielsweise zur weiteren Ver- und Bearbeitung einer Videokamera zuführt. Das von der optischen Fläche reflektierte Licht, auch Testwellenfeld genannt, enthält Aberrationen aufgrund von Linsenfehlern und Oberflächenrauhigkeiten an der zu messenden Fläche, die vom Interferenzstreifenmuster abgebildet werden. Die örtliche Lage der Abweichungen des Interferenzstreifenmusters von einem idealen Streifenmuster (z.B. parallelen Streifen) korreliert mit der örtlichen Lage der Aberration im Tescwellenfeld und damit mit den Abweichungen der cptischen Testfläche beispielsweise gegenüber einer ideal ebenen Fläche. Eine solche Verschiebung des Interfernzstreifenmusters aufgrund von Aberrationen kann die Meßempfindlichkeit erheblich beeinträchtigen, da die Streifendeformaticn z.B. in den Streifenmaxima und -minima die Testwellenfelddeformation nicht so empfindlich abbilden kann wie in den Gebieten mit hohen Intensitätsgradienten. Es ist daher wünschenswert, das Interenzstreifenmuster definiert verschieben zu können, um die Meßgenauigkeit zu verbessern. Hierzu wurde bisher die Referenzfläche oder das Meßobjekt selbst mechanisch verschoben oder gekippt, um in die zu interferierenden Strahlen und damit in das Interferenzstreifenmuster einen zusätzlichen Phasengradienten einzubringen. Auf diese Weise können auch eindeutige Informationen über die Aberration des Testwellenfeldes gewonnen werden, mit deren Hilfe danach Fehler z. B. in einer ebenen Testfläche beseicigt werden können. Durch das Bewegen großer und schwerer Meßcbjekte oder Referenzflächen werden allerdings weitere Ungenauigkeiten in das Interferometer eingeführt.

Der Erfindung liegt daher die Aufgabe zugrunde, ein verbessertes Interferometer zu schaffen, das keinen Antriebsmechanismus zur Bewegung einer Referenzfläche oder eines Meßobjektes zur Abstimmung desselben benötigt und nahezu erschütterungsfrei abgestimmt werden kann und damit Meßungenauigkeiten vermeidet.

Die Erfindung löst dieses technische Problem mit den Merkmalen des Anspruchs 1.

Vorteilhafte Weiterbildungen sind in den Unteransprüchen umschrieben.

Der Kerngedanke der Erfindung ist darin zu sehen, ein abstimmbares Interferometer bereitzustellen, ohne daß zur Abstimmung die Refsrenzfläche oder das Meßobjekt bewegt werden muß. Unter dem Abstimmen eines Interferometers versteht man üblicherweise die Änderung des optischen Weges eines Armes des Interferometers durch Verschieben oder Kippen der Referenzfläche oder des Meßobjektes, wodurch eine definierte Phase in das Interferometer eingebracht wird. Im Unterschied dazu bedeutet Abstimmung im Sinne der Erfindung, daß in das Interferometer eine definierte Phase, die sogenannte Pancharatnam Phase eingebracht wird, wobei aber die relative Lage zwischen der Referenzfläche und dem Meßobjekt nicht verändert wird. Das Phänomen der Pancharatnam-Phase ist bekannt und ausführlich in dem Aufsatz beschrieben : "Pancharatnams Phase in Polarisation Optics" von W, Doltz und S. Klein aus dem Buch "Advanced Electromagnetism" Herausgeber: T.W. Barrett und D.M. Grimes, World Scientific Verlag Singapur zirka 1993, Seiten 357-375.

Das Interferometer umfaßt wenigstens eine Lichtquelle, eine Referenzfläche und ein Meßobjekt sowie wenigstens einen Strahlteiler. Darüber hinaus enthält das Interferometer eine Einrichtung zur Polarisation der zu interferierenden Strahlen derart, daß diese am Ausgang des Interferometers jeweils einen unterschiedlichen Polarisationszustand aufweisen. Am Ausgang des Interferometers ist ein Analysator mit einem in vorbestimmter Weise änderbaren Polarisationszustand zur Abstimmung des Interferometers angeordnet. Je nach Polarisationszustand des Analysators wird in die interferierenden Strahlen unterschiedlicher Polarisation eine zusätzliche Phase, die sogenannte Pancharatnam-Phase, eingeführt, die bewirkt, daß das das Meßobjekt abbildende Interferenzstreifenmuster um eine vorbestimmte Strecke verschoben wird.

Ein linearer Zusammenhang zwischen dem Maß der Verschiebung des Streifenmusters und der Lage des Analysators ergibt sich dann, wenn bei einem Zweistrahlinterferometer die interferierenden Strahlen orthogonal zueinander polarisiert sind. Dies erreicht man dadurch, daß zunächst am Eingang des Interferometers ein linear polarisiertes Licht, vorzugsweise Laserlicht, vorliegt, und daß die Polarisationseinrichtung eine erste, der Referenzfläche oder dem Meßobjekt zugeordnete λ/4-Verzögerungsplatte und eine zweite, dem Analysator vorgeschaltete λ/4-Verzögerungsplatte umfaßt.
Die erste Verzögerungsplatte sorgt dafür, daß der von der Referenzfläche und der von dem Meßobjekt refelektierte Lichtstrahl orthcgonal zueinander polarisiert sind. Die zweite Verzögerungsplatte wandelt die beiden Strahlen in einen links bzw. rechts zirkular polarisierten Strahl um.

Bei dem Analysator kann es sich um einen drehbaren linearen Analysator oder um ein elektrisch abstimmbares Flüssigkristallelement mit einem linearen Polarisator handeln.

Um das Interferometer während des Abstimmens gegen Erschütterungen weiter schützen zu können, sind das Interferometer und der Analysator physikalisch getrennt, d.h. sogar an unterschiedlichen Orten aufgestellt.

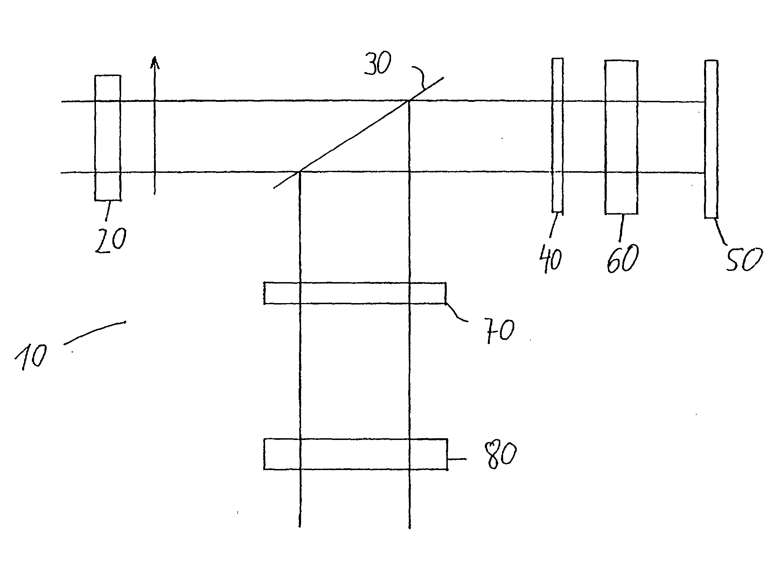

Die Erfindung wird nachfolgend anhand eines Ausführungsbeispiels in Verbindung mit der Figur näher erläutert.

Die Figur zeigt ein Zweistrahlinterferometer 10, an dessen Eingang ein linear polarisiertes Laserlicht einfällt, das zuvor einen linearen Polarisatcr 20 durchlaufen hat. Dem linearen Polarisator 20 ist ein an sich bekannter Strahlteiler 30 nachgeschaltet, der das auffallende Licht in wenigstens zwei Anteile aufteilt. Im vorliegenden Beispiel ist eine Referenzfläche 40 in den optischen Strahlengang geschaltet, der den Strahlteiler 30 passiert. Bezüglich des durch den Strahlteiler 30 hindurchgehenden Lichtstrahls befindet sich ein optisches Meßobjekt 50 hinter der Referenzfläche 40. Es sei angenommen, daß die Referenzfläche 40 eine ebene Glasplatte mit der Eigenschaft ist, daß sie e 95% des auffallenden Lichts durchläßt und 5% des auffallenden Lichts zurück zum Strahlteiler 30 reflektiert. In unserem Beispiel stellt das Meßobjekt 50 ebenfalls eine Glasplatte dar, die wiederum 5% des auffallenden Lichts reflektiert und 95% durchläßt. Zwischen der Referenzfläche 40 und dem Meßobjekt 50 ist eine λ/4-Platte 60, nachfolgend der Einfachheit halber Verzögerungsplatte 60 genannt, angeordnet. Es sei betont, daß die beschriebene relative Lage zwischen der Referenzfläche 40, der Verzögerungsplatte 60 und des Meßobjekts lediglich beispielhaften Charakter hat. Eine zweite λ/4-Platte 70, nachfolgend der Einfachheit halber kurz Verzögerungsplatte 70 genannt, ist derart in dem Interferometer 10 angeordnet, daß die von der Referenzfläche 40 und dem Meßobjekt 50 reflektierten und von dem Strahlteiler 30 abgelenkten Lichtstrahlen durch die Verzögerungsplatte 70 hindurchtreten können. Ein drehbarer linearer Analysator 80 ist der Verzögerungsplatte 70 nachgeschaltet, so daß die durch die Verzögerungsplatte 70 hindurchtretenden interferierenden Strahlen auf den Analysator 80 fallen. Dem Analysator 80 ist beispielsweise eine Videokamera (nicht dargestellt) nachgeschaltet, die das vom Interferometer 10 am Ausgang gelieferte Interferenzstreifenmuster aufnimmt.

Nachfolgend wird die Funktionsweise zur Abstimmung des Interferometers 10 ausführlicher beschrieben. Es sei nochmal betont, daß herkömmliche Interferometer dadurch abgestimmt werden, daß die Referenzfläche 40 oder das Meßobjekt 50 verschoben oder gekippt werden muß. Das erfindungsgemäße Interferometer 10 kann jedoch abgestimmt werden, ohne daß die Referenzfläche 40 oder das Meßobjekt bewegt werden muß. Mit anderen Worten bleibt die relative Lage zwischen der Referenzfläche 40 und dem Meßobjekt 50 unverändert. Dies erreicht die Erfindung dadurch, daß die zu interferierenden Strahlen - das sind die von der Referenzfläche 40 und der Meßfläche 50 reflektierten Strahlen - unterschiedliche Polarisationszustände aufweisen. Es sei nun angenommen, daß das den linearen Polarisator 20 durchlaufende Licht in Pfeilrichtung, d.h. vertikal, polarisiert ist. Das vertikal polarisierte Licht fällt auf den Strahlteiler 30 und wird beispielsweise zur Hälfte nach außen reflektiert, wobei die andere Hälfte den Strahlteiler 30 durchdringt. Das vertikal polarisierte Licht fällt zunächst auf die Referenzfläche 40, an der ein Lichtanteil von 5% reflektiert wird. Der die Referenzfläche 50 durchdringende Anteil durchläuft die Verzögerungsplatte 60, wodurch das vertikal polarisierte Licht eine rechts zirkulierende Polarisation erfährt. Fällt dieses Licht auf die Meßfläche 50, so wird das reflektierte Licht links zirkular polarisiert. Das an der Testfläche 50 reflektierte Licht durchläuft erneut die Verzögerungsplatte 60. Nach dem erneuten Durchlaufen der Verzögerungsplatte 60 besitzt das Licht wiederum eine lineare Polarisation, die jedoch zur Polarisation des an der Referenzfläche 40 reflektierten Lichts orthogonal ist. Die beiden reflektierten, interferierenden Strahlen mit orthogonal zueinander stehender Polarisation treffen wiederum auf den Strahlteiler 30, der die Hälfte der Lichtintensität auf die Verzögerungsplatte 70 umlenkt. In der Verzögerungsplatte 70 erfahren die beiden interferierenden Strahlanteile eine zirkulare Polarisation, wobei der eine Strahl rechts und der andere links zirkular polarisiert ist. Aufgrund dieses Polarisationszustandes der interferierenden Strahlen und dem drehbaren linearen Analysator 80 besteht zwischen der Verschiebung des Interferenzstreifenmusters am Ausgang des Interferometers 10 und dem Drehwinkel des linearen Analysators 80 ein linearer Zusammenhang. Zur Abstimmung des Interferometers 10 wird einfach der lineare Analysator 80 in einer vorbestimmten Weise gedreht, wodurch die sogenannte Pancharatnam-Phase in das Interferometer 10 eingeführt wird, die die lineare Verschiebung des Interferenzstreifenmusters hervorruft. Der Drehwinkel, um den der lineare Analysator 80 gedreht werden muß, um eine vorbestimmte Verschiebung des Interferenzstreifenmusters zu bewirken, läßt sich genau bestimmen, wenn als Hilfsmittel die Poincarè-Kugel eingeführt wird, die an sich bekannt ist. Die Polarisationszustände der interferierenden Strahlen liegen auf den Polen der Poincarè -Kugel, wobei der lineare Analysator 80 sich auf dem Äquator bewegt, wenn er gedreht wird. Die Phase, die auf diese Weise in das Interferometer 10 eingefügt wird, beträgt γ=½ Ω (A, R, L, P), wenn Ω der sphärische Exzess des sphärischen Zweiecks A, R, P, L, A auf der Poincarè-Kugel ist. A ist hierin der lineare Polarisationszustand des Lichts am Eingang des Interferometers 10. R und L steht für den rechts bzw. links zirkulierenden Polarisationszustand der beiden zu interferierenden Strahlen. Der rechts R bzw. links L zirkulierende Polarisationszustand der beiden interferierenden Strahlen erfolgt, wie bereits erwähnt durch die Verzögerungsplatten 60 und 70. Das rechts und links zirkular polarisierte Licht (R, L) liegt, wie bereits erwähnt, am Ausgang der Verzögerungsplatte 70 an. Mit Hilfe des drehbaren linearen Analysators 10 wird am Ausgang des Interferometers zwischen die links und rechts zirkular polarisierten Strahlen die Pancharatnam-Phase γ eingeführt, die proportional zum Drehwinkel des Analysators 80 ist. Durch definiertes Drehen des Analysators 80 wird sie in vorbestimmter Weise verändert und die Interferenzscreifen, die von der Videokamera aufgenommen werden, verschieben sich sc, wie wenn die Referenzfläche 40 oder die Testfläche 50 verschoben worden wären. Anstelle eines drehbaren linearen Analysators 80 kann ein an sich bekanntes elektrisch abstimmbares Flüssigkristallelement mit einem linearen Polarisator eingesetzt werden. Besonders bevorzugt ist eine elektrisch drehbare λ/2-Verzögerungsplatte, wie sie mit moderner Flüssigkristalltechnik herstellbar ist. Bei derartigen Verzögerungsplatten, die sehr schnell arbeiten, wird die Achsenorientierung mit der elektrischen Spannung gedreht.

Die Abstimmung des Interferometers 10 gelingt bei allen Verfahren, bei denen die beiden Strahlen unterschiedlich polarisiert sind. Allerdings ist die Abstimmung nur linear, d. h. berechenbar, wenn die Polarisationen der an der Referenzfläche 40 und dem Meßobjekt 50 reflektierten Strahlen orthogonal sind und sich der Analysator auf dem symmetrisch dazwischen befindlichen Großkreis auf der Poincaré-Kugel bewegt.

## Patentansprüche

1. Abstimmbares Interferometer (10), insbesondere zur Vermessung von optischen Flächen, mit
wenigstens einer Lichtquelle,
einer Referenzfläche (40) und einem Meßobjekt (50), und wenigstens einem Strahlteiler (30),
eine Einrichtung (60, 70) zur Polarisation der zu interferierenden Strahlen derart, daß sie am Ausgang des Interferometers (10) einen unterschiedlichen Polarisationszustand zueinander aufweisen, und
einem am Ausgang des Interferometers (10) angeordneten Analysator (80), mit einem in vorbestimmter Weise änderbaren Polarisationszustand zur Abstimmung, des Interferometers (10), **dadurch gekennzeichnet, dass**
der Analysator (80) physikalisch getrennt vom Interferometer (10) angeordnet ist.

2. Interferometer nach Anspruch 1, **dadurch gekennzeichnet, daß** das Interferometer (10) ein Zweistrahlinterferometer ist,
daß am Eingang des Interferometers linear polarisiertes Licht vorliegt und daß
die Polarisierung eine erste, der
Referenzfläche oder dem Meßobjekt zugeordnete λ/4-Verzögerungsplatte (60) und eine zweite, dem Analysator (80) vorgeschaltete λ/4-Verzögerungsplatte (70) umfaßt.

3. Interferometer nach Anspruch 1 oder 2, **dadurch gekennzeichnet, daß** der Analysator (80) ein drehbarer linearer Analysator ist.

4. Interferometer nach Anspruch 1 oder 2, **dadurch gekennzeichnet, daß** der Analysator (80) ein elektrisch abstimmbares Flüssigkristallelement mit einem linearen Polarisator umfaßt.

## Claims

1. Tunable interferometer (10), in particular for the measurement of optical surfaces, with
at least one light source,
a reference surface (40) and a test specimen (50) and at least one beam splitter (30),
an apparatus (60, 70) for the polarization of the interference beams such that, at the output of the interferometer (10), they have different polarization states with respect to each other; and
an analyzer (80), disposed at the output of the interferometer (10), with a polarization state variable in predetermined manner for tuning the interferometer (10), **characterized in that** the analyzer (80) is physically separate from the interferometer (10).

2. Interferometer according to claim 1, **characterized in that** the interferometer (10) is a two-beam interferometer;
**in that** linearly polarized light is present at the input of the interferometer; and
**in that**
the polarization apparatus comprises a first λ/4 retardation plate (60), associated with the reference surface or with the test specimen, and a second λ/4 retardation plate (70), positioned before the analyzer (80).

3. Interferometer according to claim 1 or 2, **characterized in that** the analyzer (80) is a rotatable linear analyzer.

4. Interferometer according to claim 1 or 2, **characterized in that** the analyzer (80) comprises an electrically tunable liquid-crystal element with a linear polarizer.

## Revendications

1. Interféromètre accordable (10), notamment pour la mesure de surfaces optiques, avec au moins une source lumineuse, une surface de référence (40), un objet de mesure (50) et au moins un séparateur de faisceaux (30) et un dispositif (60, 70) pour la polarisation des faisceaux à interférer, de sorte qu'à la sortie de l'interféromètre (10), ces faisceaux montrent un état de polarisation différent entre eux, et un analyseur (80) placé à la sortie de l'interféromètre (10) avec un état de polarisation modifiable de manière prédéfinie pour l'accord de l'interféromètre (10), **caractérisé en ce que** l'analyseur (80) est physiquement séparé de l'interféromètre (10).

2. Interféromètre selon la revendication 1, **caractérisé en ce que**
- l'interféromètre (10) est un interféromètre à deux faisceaux,
- à l'entrée de l'interféromètre est appliquée une lumière polarisée de manière linéaire et
- la polarisation regroupe une première plaque retardatrice λ / 4 (60) affectée à la surface de référence ou à l'objet de mesure et une deuxième plaque retardatrice λ / 4 (70) placée en amont de l'analyseur (80).

3. Interféromètre selon la revendication 1 ou 2, **caractérisé en ce que** l'analyseur (80) est un analyseur linéaire tournant.

4. Interféromètre selon la revendication 1 ou 2, **caractérisé en ce que** l'analyseur (80) comprend un élément à cristaux liquides électriquement accordable avec un polarisateur linéaire.
